Europäisches Patentamt

European Patent Office

Office européen des brevets

(11) Veröffentlichungsnummer: **0 400 591**
**A2**

(19)

(12) **EUROPÄISCHE PATENTANMELDUNG**

(21) Anmeldenummer: 90110214.5

(22) Anmeldetag: 30.05.90

(51) Int. Cl.5: **B01J 31/16, B01J 37/14,**
**B01J 37/06, B01D 53/36**

(30) Priorität: 01.06.89 DE 3917890

(43) Veröffentlichungstag der Anmeldung:
05.12.90 Patentblatt 90/49

(84) Benannte Vertragsstaaten:
AT BE CH DE FR GB IT LI LU NL SE

(71) Anmelder: **Steinbach, Friedrich,**
**Prof.Dr.rer.nat.**
**Trenknerweg 133**
**D-2000 Hamburg 52(DE)**

(72) Erfinder: **Steinbach, Friedrich, Prof. Dr.**
**Trenknerweg 133**
**D-2000 Hamburg 52(DE)**
Erfinder: **Ellmers-Kutzinski, Reinhild, Dr.**
**Eidelstedter Weg 62**
**D-2000 Hamburg 20(DE)**
Erfinder: **Brunner, Andreas, Dr.**
**Susannenstrasse 14 a**
**D-2000 Hamburg 36(DE)**
Erfinder: **Müller, Holger, Dipl.-Chem.**
**Beim Pachthof 21**
**D-2000 Hamburg 74(DE)**

(54) **Trägergestützte Katalysatoren zum Entfernen von Stickoxiden, Kohlenmonoxid und organischen Verbindungen aus Abgasen.**

(57) Trägergestützter Katalysator auf Basis von Übergangsmetallen zum Entfernen von Stickoxiden, Kohlenmonoxid und/oder organischen Verbindungen aus Abgasen, herstellbar durch

(a) Beladen eines Trägers mit wenigstens einer Metallkomplexverbindung mit einer ebenen oder nur wenig davon abweichenden Konformation und Aktivieren des beladenen Trägers mit

(i) einem Gasgemisch, das Stickoxid und/oder Sauerstoff enthält, bei Temperaturen zwischen Raumtemperatur und 500°C, oder mit

(ii) einer Lösung, die Salpetersäure und/oder ein Oxidationsmittel enthält; oder

(b) Beladen eines Träger mit wenigstens einem Übergangsmetalloxid oder -carbonat und Behandeln des beladenen Trägers mit einem oxidierenden Gasgemisch, das zur Komplexbildung befähigte freie Liganden enthält bei Temperaturen zwischen Raumtemperatur und 500°C; oder

(c) Behandeln wenigstens eines Übergangsmetalloxids oder -carbonats mit einer Lösung, die Salpetersäure und/oder ein Oxidationsmittel enthält und Beladen eines Trägers mit dem behandelten Übergangsmetalloxid oder -carbonat, sowie Verfahren zu seiner Herstellung und seine Verwendung zur Behandlung von Abgasen.

## Trägergestützte Katalysatoren zum Entfernen von Stickoxiden, Kohlenmonoxid und organischen Verbindungen aus Abgasen

Die Erfindung betrifft trägergestützte Katalysatoren auf Übergangsmetallbasis zum Entfernen von Stickoxiden, Kohlenmonoxid und/oder organischen Verbindungen aus Abgasen, Verfahren zu ihrer Herstellung sowie ihre Verwendung bei der Behandlung von Stickoxide, Kohlenmonoxid und/oder organischen Verbindungen enthaltenden Abgasen.

Es ist bekannt, daß aus technischen Metallphthalocyaninen und einem Träger ein Katalysator zum Entfernen von Stickoxiden, Kohlenmonoxid und/oder Restkohlenwasserstoffen aus Abgasen gebildet werden kann (DE-C-35 22 637 und EP-B1-0 228 398). Die Metallphthalocyanine werden dazu mit oxidierenden Gasmischungen behandelt, so daß in einem geregelten Teilabbau der stabilen Komplexe, unterstützt durch die komplexbedingte große Entfernung der Metallionen voneinander, eine hochungeordnete, vom stöchiometrischen Oxid sowohl wie vom stöchiometrischen Metallkomplex stark abweichende, stabile und hochaktive Katalysatorpräparation entsteht.

Für die der Umwandlung in die aktive Komponente (Modifizierung) vorausgehende Fixierung der Metallphthalocyanine auf Trägern sind mehrere Verfahren entwickelt worden. Dazu gehören die Tränkung des Trägers mit Lösungen und Suspensionen, die Fällung von Trägermaterialien aus Metallphthalocyaninsuspensionen mit anschließender Formung und Trocknung, die Überführung der Metallphthalocyanine in lösliche Derivate, so daß eine Tränkung erleichtert wird, und die Direktsynthese der Metallphthalocyanine aus löslichen Vorstufen auf den Trägern. Für den Fall, daß die Metallphthalocyanine auf einer Zwischenschicht und nicht direkt auf dem Träger aufgebracht werden sollen, kann diese Zwischenschicht vor dem Aufbringen der Metallphthalocyanine, aber auch gleichzeitig mit dem Aufbringen der Metallphthalocyanine in einem Arbeitsgang aufgebracht werden.

Da die Reinigung von Abgasen oder Abluft hohe Kosten erzeugt, an denen die Kosten für die Herstellung von Katalysatoren einen nicht unbeträchtlichen Anteil darstellt, und ferner die Kriterien für die zuträglichen unerwünschten und erlaubten Restgehalte ständig verschärft werden und diese Verschärfung auch in gesetzliche Regelungen eingegangen ist (Dynamisierungsklausel), ergibt sich die volkswirtschaftliche und technische Aufgabe, die Herstellung der Katalysatoren kostengünstiger zu gestalten, insbesondere nach Materialien und Herstellungsschritten zu suchen, deren Verfügbarkeit und Variabilität breiter, deren Verarbeitungsbedingungen flexibler und deren Verarbeitungsschritte einfacher sind, und die Herstellungsprozedur insgesamt verfahrensmäßig zu vereinfachen. Ferner ist eine Verbreiterung des Anwendungsbereiches wünschenswert. Hier ist insbesondere der oxidative Abbau jeglicher Art bei Abgasen enthaltener organischer Verbindungen wünschenswert, wie dies in weitem Maße bereits gesetzlich vorgeschrieben ist und künftig zweifellos noch verschärft werden wird. Auch nach der schon vielfach praktizierten Rückgewinnung durch Kondensation und Sorption verbleibt ein Restgehalt in der Abluft, der durch katalytische Nachoxidation bei möglichst niedriger Temperatur zu unbedenklichen Bestandteilen abgebaut werden muß.

Diese Aufgabe wird erfindungsgemäß gelöst durch einen Trägergestützten Katalysator auf Basis von Übergangsmetallen zum Entfernen von Stickoxiden, Kohlenmonoxid und/oder organischen Verbindungen aus Abgasen, herstellbar durch

(a) Beladen eines Trägers mit wenigstens einer Metallkomplexverbindung mit einer ebenen oder nur wenig davon abweichenden Konformation (Konstitution) und Aktivieren des beladenen Trägers mit

(i) einem Gasgemisch, das Stickoxid und/oder Sauerstoff enthält, bei Temperaturen zwischen Raumtemperatur und 500° C, oder mit

(ii) einer Lösung, die Salpetersäure und/oder ein Oxidationsmittel enthält; oder

(b) Beladen eines Träger mit wenigstens einem Übergangsmetalloxid oder -carbonat und Behandeln des beladenen Trägers mit einem oxidierenden Gasgemisch, das zur Komplexbildung befähigte freie Liganden enthält bei Temperaturen zwischen Raumtemperatur und 500° C; oder

(c) Behandeln wenigstens eines Übermetalloxids oder -carbonats mit einer Lösung, die Salpetersäure und/oder ein Oxidationsmittel enthält und Beladen eines Trägers mit dem behandelten Übergangsmetalloxid oder -carbonat mit der Maßgabe, daß als Übergangsmetallverbindung kein Metallphthalocyaninkomplex verwandt wird.

Für die erfindungsgemäßen Katalysatoren können grundsätzlich die Oxide, Carbonate oder Komplexverbindungen aller Übergangsmetalle eingesetzt werden. Ein besonderer Vorteil der Erfindung liegt jedoch darin, daß es nicht notwendig ist, solche Übergangsmetalle einzusetzen, die sich durch einen hohen Preis oder besondere Toxizität auszeichnen, also etwa Gold, Silber oder die Platinmetalle bzw. Chrom oder Nickel, obwohl auch diese Metalle mit guten Ergebnissen verwandt werden können. Besonders bevorzugt werden Verbindungen der Metalle V, W, Mn, Cu, Fe, Co und Ni eingesetzt, wobei auch mehr als nur ein Übergangsmetall verwandt werden kann.

Als Träger können alle aus dem Stand der Technik bekannten und üblichen Materialien und Werkstoffe verwandt werden, insbesondere die in DE-C-35 22 637 und EP-B1-0 228 398 beschriebenen und benutzten Stoffe und Stoffmischungen.

Bevorzugte Träger sind Kieselgur, Siliciumdioxid, Cordierit, Steatit, Mullit, Aluminiumoxid, Ton, Kaolin und Perlit, weiterhin Alumosilicate insbesondere Zeolithe vom Typ A, X, Y oder ZSM sowie natürliche Zeolithe und Feldspäte. Ferner sind bevorzugt Graphit, Magnesiumsilicate und -oxid, Zirkonsilicat und -oxid, Titandioxid und Siliciumcarbid sowie Metalle mit und ohne Oxidüberzüge.

Vorzugsweise haben die erfindungsgemäß verwandten Trägermaterialien eine mikroporöse Struktur.

Als besonders vorteilhaft haben sich Träger auf Cordieritbasis, insbesondere Cordierit-Wabenkörper sowie Aluminiumoxid und Zeolithe erwiesen. Diese Trägermaterialien können auch auf andere Substrate, etwa Metall, Glas, Keramik, Glas- oder Mineralfasern aufgebracht sein.

Die Trägermaterialien werden auf herkömmliche Weise mit den Oxiden, Carbonaten oder Komplexverbindungen der Übergangsmetalle beladen. Es kann beispielsweise durch Tränken des Trägers mit einer Lösung oder Suspension der entsprechenden Metallverbindung in Wasser oder einem Lösungsmittel erfolgen, durch mechanisches Auf- oder Einbringen, Mischen der pulverförmigen Materialien und anschließend Formen des beladenen Trägers oder durch Auf- oder Einbringen einer Lösung oder Suspension einer Übergangsmetallverbindung, die sich zu den gewünschten Übergangsmetalloxiden oder Carbonaten zersetzen lassen, beispielsweise durch thermische Behandlung in Gegenwart oder Abwesenheit von Sauerstoff.

Die Mengen an auf- oder eingebrachter Übergangsmetallverbindung betragen im allgemeinen 2 bis 40 Gew.-%, vorzugsweise 5 bis 30 Gew.-%, bezogen auf das Gewicht des Trägermaterials.

Die erfindungsgemäßen trägergestützten Katalysatoren eignen sich besonders zum Entfernen von Stickoxiden, Kohlenmonoxid und organischen Verbindungen aus Luft und Abgasen, beispielsweise aus Verbrennungsmotoren, Kraftwerken, aber auch Anlagen, in denen organischen Chemikalien oder Lösungsmittel erzeugt, verarbeitet oder eingesetzt werden. Insbesondere eignen sich die erfindungsgemäßen Katalysatoren auch zur oxidativen Beseitigung von sauerstoff- und/oder stickstoffhaltigen flüchtigen organischen Verbindungen, wie Alkoholen, Ketonen, Aldehyden, Ethern, Säuren, Estern, Amiden und Aminen. Für die Reduktion der Stickoxide wird $NH_3$ benutzt. Bei geringen Sauerstoffgehalten im Abgas ist auch CO als Reduktionsmittel einsetzbar, solange der Gehalt an Stickoxiden und Sauerstoff insgesamt geringer ist als die CO-Beimengung.

Gegenstand der Erfindung ist ferner ein Verfahren zur Herstellung des trägergestützten Katalysators durch

(a) Beladen eines Trägers mit wenigstens einer Metallkomplexverbindung mit einer ebenen oder nur wenig davon abweichenden Konformation und Aktivieren des beladenen Trägers mit

(i) einem Gasgemisch, das Stickoxid und/oder Sauerstoff enthält, bei Temperaturen zwischen Raumtemperatur und 500 °C, oder mit

(ii) einer Lösung, die Salpetersäure und/oder ein Oxidationsmittel enthält; oder

(b) Beladen eines Träger mit wenigstens einem Übergangsmetalloxid oder -carbonat und Behandeln des beladenen Trägers mit einem oxidierenden Gasgemisch, das zur Komplexbildung befähigte freie Liganden enthält bei Temperaturen zwischen Raumtemperatur und 500 °C; oder

(c) Behandeln wenigstens eines Übergangsmetalloxids oder -carbonats mit einer Lösung, die Salpetersäure und/oder ein Oxidationsmittel enthält und Beladen eines Trägers mit dem behandelten Übergangsmetalloxid oder -carbonat.

Von besonders günstiger Wirkung für eine hohe Aktivität der erfindungsgemäßen Katalysatoren gemäß Variante (a) sind Zwischenschichten aus Oxiden eines oder mehrerer Übergangsmetalle, allgemein als Washcoats bezeichnet, wobei es weniger auf einen schichtweisen Aufbau, als auf eine innige Vermengung von Washcoat und katalytischer Substanz ankommt. Die Zwischenschichten aus Übergangsmetalloxiden sollten deshalb vor oder zusammen mit den Übergangsmetallkomplexverbindungen auf den Träger auf- oder in diesen eingebracht werden. Die Aufbringung oder Einbringung der Washcoats erfolgt auf die oben beschriebene Weise. Die Menge an Übergangsmetalloxid beträgt im allgemeinen 0,5 bis 30 Gew.-%, vorzugsweise 2 bis 25 Gew.-%, zuzüglich zum Anteil der Komplexverbindung.

Das Übergangsmetall der Oxid-Zwischenschicht kann das gleiche oder ein anderes sein wie das der aktivierten Komplexkomponente.

Die gleichmäßige Verteilung sowohl der eingebrachten Katalysatorvorläufer als auch der aus ihnen erzeugten Katalysatoren im Trägervolumen bei vollständig imprägnierten Trägern (Vollkontakt) bzw. in einer oberflächennahen Schicht bei nicht vollständig imprägnierten Trägern ist durch infrarotspektroskopische Untersuchungen von Brüchen, Schnitten und Schliffen belegt. Durch die mit den genannten Präparationsmethoden erreichte innige Vermengung von Katalysatoren und Träger sind die Katalysatoren auch bei sehr

EP 0 400 591 A2

hohen Volumengeschwindigkeiten (SV) von bis zu $10^6$ $h^{-1}$ gegenüber Mitführung durch den hohen Gasstrom beständig. Außerdem enthält in vollständig imprägnierten Trägern bei Oberflächenabtrag durch Staub im Abgas die ständig neu erzeugte Oberfläche stets aktiven Katalysator.

Wie schon bei den Metallphthalocyaninen ist auch bei den erfindungsgemäß eingesetzten weiteren ebenen oder beinahe ebenen Komplexen eine Wechselwirkung mit Übergangsmetalloxiden festzustellen, dergestalt, daß die Temperaturen des oxidativen Teilabbaus mittels oxidierender oder nitrierender Gase und Dämpfe in Gegenwart der innig vermengten Übergangsmetalloxide deutlich niedriger liegen als die bekannten Stabilitätsgrenzen gegenüber oxidierenden Atmosphären der jeweiligen Verbindungen ohne Kontakt zu Übergangsmetalloxiden.

Es ist bekannt, daß auch Metalloxide und Mischungen derselben vielfältig für katalytische Reaktionen mit NO und auch für Oxidationen eingesetzt werden. Sorgfältige Prüfung durch Aktivitäts- und Umsatzmessungen, insbesondere durch Untersuchung der Kennlinien des Umsatzes in Abhängigkeit von der Temperatur ergab aber, daß die durch gemeinsames Auf- bzw. Einbringen von Metalloxid und Metallkomplex auf bzw. in Trägern erzeugten erfindungsgemäßen Katalysatoren sich von solchen Präparationen, bei denen nur das Metalloxid auf-bzw. eingebracht ist, unterscheiden. Diese Prüfung ist besonders überzeugend, wenn erst das Übergangsmetalloxid eingeführt, dann dessen Aktivität kontrolliert und anschließend der Metallkomplex dazu eingeführt und modifiziert wird. Es ergeben sich deutliche Unterschiede der Umsatzkennlinien gegenüber den nur mit Oxid beladenen Trägern, insbesondere im niedrigen Temperaturbereich unterhalb 250°C. Von besonderer Tragweite ist diese Prüfung bei den Präparationen, bei denen die komplexierenden Bestandteile nicht als Ligand des zur Präparation benutzten Komplexes, sondern als gasförmige Komponente mit dem Modifizierungsgas eingeführt werden. Hier treten Liganden aus der Gasphase mit vorher aufgebrachten Oxiden oder Carbonaten in Wechselwirkung, so daß an der Oberfläche vorübergehend Komplexe entstehen, die sofort oxidierend oder nitrierend teilabgebaut werden, dergestalt, daß die aufgebrachten Oxide oder Carbonate etc. in aktive Katalysatoren übergehen. Auch hier zeigen die Prüfungen der Umsatzkennlinien ausgeprägte Aktivitätsunterschiede und insbesondere eine bei wesentlich niedrigeren Temperaturen liegende Aktivität nach der Modifizierungsreaktion sowie häufig eine drastische Änderung der Selektivität.

Die starken Oberflächenunterschiede zwischen den erfindungsgemäß erzeugten aktiven Katalysatorpräparationen und den Oxiden werden weiterhin in rasterelektronenmikroskopischen Aufnahmen der Oberflächen deutlich. Photoelektronenspektroskopische Untersuchungen zeigen, daß auch nach dem Abbau der Komplexe durch nitrierende oder oxidierende Behandlung in Gegenwart ligandenhaltiger Gase noch Bestandteile der organischen Komponenten in den aktiven Oberflächen enthalten sind.

Da die erfindungsgemäß verwendbare Klasse der ebenen und fast ebenen Komplexe wesentlich breiter ist als die Klasse der Metallphthalocyanine, insbesondere da viele der brauchbaren Komplexe kleiner sind und/oder stärker polare Gruppen tragen oder darstellen, werden an die für Lösungen und Suspensionen benötigten Lösemittel geringere Anforderungen gestellt. Die Löslichkeit ist meist bedeutend höher als bei den Pthalocyaninen. Insbesondere kann oft auch mit wäßrigen Lösungen und Mischungen gearbeitet werden, so daß die Herstellung der erfindungsgemäßen Katalysatoren einfacher und kostengünstiger ist.

Erfindungsgemäß kommt es darauf an, daß durch mitgebrachte Liganden oder durch aus dem Gasraum vorübergehend aufgenommen Liganden Auflockerungen der Struktur und Vergrößerungen der Oberfläche erreicht werden. Gleichzeitig muß zur Stabilisierung ein direkter Kontakt der Metallatome mit der aus Träger und/oder Washcoat gebildeten Unterlage ermöglicht werden. Deshalb sind nicht metallorganische Verbindungen oder Komplexe schlechthin, sondern nur ebene oder fast ebene Komplexe geeignet. Da die Ausbildung einer geordneten und geschlossenen Oxidstruktur in jedem Falle eine konkurrierende Möglichkeit darstellt, hängt die optimale Ausgestaltung des Erzeugungsprinzips sowohl vom verwendeten Zentralmetall als auch der Stabilität und Struktur seines Oxids ab. Daher kann einmal die Zersetzung eines ebenen Komplexes, ein andermal die Einwirkung einer Komplexbildner enthaltenden Gasmischung auf ein Oxid oder Carbonat zu höherer Wirksamkeit führen. Häufig ist es günstig, mehrere Möglichkeiten der Einwirkung gleichzeitig anzuwenden. So kann beispielsweise durch die Verwendung eines oxidischen Washcoats, auf den der Komplex aufgebracht wird, die Temperatur für seinen Abbau gesenkt und der Abbau damit verlangsamt werden, wobei eine während des Abbaus vorhandene Komplexbildner enthaltende Gasmischung die konkurrierende Bildung einer glatten Oberfläche verhindert.

Da beim Abbau der Komplexstruktur gasförmige Produkte entstehen, ist es wesentlich, daß das Modifizierungsgas strömt, damit die Reaktionsprodukte ständig abgeführt werden und der Wechselwirkungsprozeß zwischen Gasatmosphäre und Oberfläche nicht durch Verlangsamung der Reaktion und Verarmung an Komplexbildnern in der unmittelbaren Nachbarschaft der Oberfläche gestört wird. Dies führt zu kräftigen Minderungen der Aktivitäten. Komplexierende Bestandteile sind NO, CO, $NH_3$, um die wichtigsten und technologisch unbedenklichsten zu nennen. Weiterhin sind Ethylen, Ethylendiamin oder Hydrazin als Beispiele zu nennen.

Als Komplexe sind alle ebenen Komplexe geeignet, weil durch sie einerseits der für die Bindung an die Unterlage notwendige Kontakt des Zentralmetalls ermöglicht und andererseits eine Einrastung der Metalle in die Oxidlagen wegen des durch die ebene Ausdehnung erzeugten Misfits weitgehend verhindert wird.

Bevorzugt werden Verbindungen der Metalle V, W, Mn, Cu, Fe, Co und Ni eingesetzt, wobei auch mehr als nur ein Übergangsmetall verwandt werden kann.

Als Komplexe finden insbesondere Verwendung Vanadyloxalat, Vanadylacetylacetonat, Vanadylsalicylat, Vanadyltartrat, Vandylbrenzcatechinat, ebenso Manganoxaiat, Manganacetylacetonat, Mangansalicylat, Manganacetat, Manganpropionat, ebenso Eisenoxalat, Eisenphthalat, Eisenacetylacetonat, Eisensuccinat, Eisentetraphenylporphyrin, Eisenporphyrin, ebenso Cobaltphthalat, Cablatdiacetyldioxim, Coabltetraphenyl-porphyrin, Cobalttetraazaannulen, Cobaltacetat, ebenso Nickeldiacetyldioxim, Nickeltetraphenylporphyrin, Nickelacetat, ebenso Kupferacetat, Kupferoxalat, Kupferacetylacetonat, Kupferphthalat.

Insgesamt sind Komplexe geeignet mit den Liganden Essigsäure, Oxalsäure, Weinsäure, Salicylsäure und weitere niedrige Carbon-, Dicarbonsäuren und Hydroxycarbonsäuren, insbesondere mit 2 bis 10 Kohlenstoffatomen, 1,3-Diketone, substituierte und unsubstituierte aromatische ortho-Caroxylbenzoesäuren, substitutierte und unsubstituierte aromatische mono-ortho-Hydroxycarbonsäuren, substituierte und unsubstituierte ortho-Hydroxyphenole, substituierte und unsubstituierte Tetraphenylporphyrine, substituierte und unsubstituierte Tetraazaporphyrine, substituierte und unsubstituierte Tetraazaannulene, substituierte und unsubstituierte Porphyrine, substituierte und unsubstituierte Hemiporphyrazine, substituierte und unsubstituierte Bis-1,2-dioxime, substituierte und unsubstituierte Tetraazacyclododekantetraessigsäure, sowie Kronether.

Die Aktivierung des mit wenigstens einer Metallkomplexverbindung beladenen Trägers kann mit Hilfe eines Gasgemisches erfolgen, das Stickoxid und/oder Sauerstoff enthält. In der Regel wird ein Inertgas verwandt, beispielsweise Stickstoff oder Argon, dem eine bestimmte Menge Stickoxid und/oder Sauerstoff zugemischt wird. Als Stickoxid kann sowohl NO als auch $NO_2$ verwandt werden, wobei NO bevorzugt ist. Als weitere Bestandteile des Aktivierungsgasgemisches kommen CO und $NH_3$ in Frage.

Die Aktivierung des beladenen Trägers erfolgt bei einer Temperatur zwischen Raumtemperatur und 500° C. Im allgemeinen wird dazu der beladene Träger im Aktivierungsgemisch über einen Zeitraum von 1 bis 10 Stunden von Raumtemperatur auf eine Temperatur zwischen 80 und 500° C, vorzugsweise zwischen 180 und 450° C erhitzt und gegebenenfalls bis zu 10 Stunden auf der Endtemperatur gehalten.

Das Aktivierungsgasgemisch enthält die aktivierenden Komponenten im allgemeinen in Mengen von 250 ppm bis 5 %, bezogen auf das Volumen. Der Sauerstoffgehalt beträgt vorzugsweise 0,1 bis 25 % Vol.-% und der Gehalt an NO und anderer gegebenenfalls vorhandener Gase 500 bis 5000 ppm. Besonders bevorzugt ist ein Gehalt von jeweils etwa 1000 ppm NO, CO und $NH_3$ sowie von etwa 1 bis 2 % $O_2$. Die Aktivierung kann auch unter Verwendung von Luft erfolgen.

Alternativ zur Aktivierung mit einem Gasgemisch bei erhöhten Temperaturen kann der beladene Träger auch mit einer Lösung, die Salpetersäure und/oder ein Oxidationsmittel enthält, erfolgen. Als Lösungsmittel wird vorzugsweise Wasser oder eine wäßrige organische Lösung verwandt, die gegen Salpetersäure inert ist. Der Gehalt an Salpetersäure beträgt im allgemeinen zwischen 1 und 20 Gew.-%, der an Oxidationsmittel im allgemeinen zwischen 2 und 20 Gew.-%. Als weitere Oxidationsmittel können salpetrige Säure sowie Nitriersäure und Lösungen von Stickoxiden verwandt werden.

Die Aktivierung erfolgt vorzugsweise in der Wärme, beispielsweise bei Temperaturen zwischen 20 und 50° C.

Alternativ kann der erfindungsgemäße trägergestützte Katalysator auch durch Aktivieren eines mit wenigstens einem Übergangsmetalloxid- oder Carbonat beladenen Trägers erhalten werden. In diesem Falle erfolgt die Aktivierung mit dem oben beschriebenen Aktivierungsgasgemisch, dem allerdings ein gasförmiger zur Komplexbildung befähigter freier Ligand zugemischt sein muß. Als solche Komplexe bildende freie gasförmige Liganden kommen insbesondere NO, $NH_3$ und CO in den oben angegebenen Mengen in Frage. Weitere einsetzbare zur Komplexierung befähigte Liganden sind Ethylen, Ethylendiamin oder Hydrazin. Wesentlich ist, daß die Liganden zur Bildung von Komplexen befähigt sind, die die Ausbildung einer geordneten, wenig reaktiven Oxidschicht auf dem und im Träger verhindern.

Gemäß einer Variante des Herstellungsverfahrens wird die Übergangsmetalloxid- oder -carbonatschicht auf dem Träger selbst erzeugt. In diesem Fall wird so vorgegangen, daß der Träger mit einer Verbindung des gewünschten Übergangsmetalls, die in ein Medium gelöst oder suspendiert vorliegt, imprägniert wird und anschließend einer Behandlung unterzogen wird, bei der sich die jeweils auf- oder eingebrachte Übergangsmetallverbindung zum Oxid oder Carbonat zersetzt. Vorzugsweise erfolgte diese Zersetzung thermisch, durch Erhitzen in Anwesenheit von Sauerstoff oder Luft.

Die Aktivierung der Übergangsmetallkomplexverbindung kann auch vor dem Beladen des Trägers in

5

EP 0 400 591 A2

Lösung stattfinden, wobei die oben erwähnte Salpetersäure bzw. Oxidationsmittelösung verwandt wird.
Die Erfindung wird durch die nachfolgenden Beispiele näher beschreiben.

Beispiele:

Nachfolgend ist die Erfindung anhand von Beispielen näher erläutert. In den Beispielen wird zunächst die Herstellung der Katalysatoren auf den Trägern beschrieben. Sofern es sich um die Aufbringung durch Tränken der Träger mittels Lösungen oder Suspensionen handelt, ist nur die Zusammensetzung der Tränklösung oder Tränksuspension angegeben. Als Trägerkörper werden überwiegend Cordierit-Wabenkörper verwandt, in der Regel vom Querschnitt 2,5 x 2,5 cm² und von 5 cm oder 10 cm Länge mit 16 Kanälen auf dem angegebenen Querschnitt. Die Tränkung geschieht zu wiederholten malen, bis die gewünschte angegebene Beladung erreicht ist. Zwischen den Tränkungen werden die Träger getrocknet, bevorzugt bei 110 bis 120°C. Für die Aktivierung wird ein Gasgemisch benutzt, dessen Zusammensetzung jeweils angegeben wird. Im Anschluß an die Beschreibung der Herstellung und Aktivierung werden die Aktivitäten, d.h. die Umsätze, die in verschiedenen katalytischen Reinigungsprozessen erzielt werden, in tabellarischer Form angegeben.

Beispiel 1, Manganacetylacetonat, Mn(acace)$_2$

Tränklösung: 102 g Mn(acace)$_2$ in 180 ml Wasser und 20 ml Ameisensäure.
Träger: Cordierit-Wabenkörper.
Beladung durch Tränkung bei Zimmertemperatur, anschließende Trocknung und erneute Tränkung und Trocknung, bis eine Beladung mit 12 Gewichts% Mn(acace)$_2$ erreicht ist.
Aktivierung durch Behandlung im Gasgemisch aus jeweils 1000 ppm NO und NH$_3$, 1 % O$_2$, Rest N$_2$ mit Raumgeschwindigkeit SV = 3000 h$^{-1}$ innerhalb 5 Stunden von Zimmertemperatur auf 200°C ansteigend.

| Aktivität | | | |
|---|---|---|---|
| Reaktion | Umsatz(%) | Temp.°C | Testgas, SV = 3000 h$^{-1}$ |
| Ethanol-Ox. | 89 | 294 | 1800 ppm Ethanol in Luft |
| Aceton-Ox. | 91 | 270 | 2000 ppm Aceton in Luft |
| Ethylacetat-Ox. | 93 | 309 | 500 ppm Ethylacetat in Luft |
| Ether-Ox. | 88 | 360 | 1500 ppm Ehter in Luft |
| Benzol-Ox. | 97 | 355 | 300 ppm Benzol in Luft |
| Benzylamin-Ox. | 83 | 302 | 1100 ppm Benzylamin in Luft |
| Anilin-Ox. | 93 | 305 | 1200 ppm Anilin in Luft |
| Propan-Ox. | 92 | 375 | 1000 ppm Propan in Luft |
| CO-Ox. | 95 | 160 | 1100 ppm CO, 2500 ppm O$_2$, Rest N$_2$ |

Gleiche Präparationen werden statt mit der angegebenen Gasmischung mit Gemischen aus je 1000 ppm NO, CO, NH$_3$, 0,5 % O$_2$, Rest N$_2$ sowie aus 1000 ppm NO 3000 ppm CO, Rest N$_2$ sowie aus 2000 ppm CO, 1000 ppm NH$_3$, 0,5 % O$_2$ aktiviert. Die erzielten Umsätze sind im Wesentlichen die gleichen wie in der Tabelle angegeben.

Beispiel 2, Manganacetylacetonat auf Manganoxid-Kupferoxid-Washcoat

Tränklösungen:
1. 125 g Manganacetat, Mn(CH$_3$COO)$_2$ x 4 H$_2$O in 500 ml Wasser
2. 12 g Kupfernitrat, CU(NO$_3$)$_2$ x 3 H$_2$O in 500 ml Wasser
3. 102 g Mn(acace)$_2$ in 180 ml Wasser und 20 ml Ameisensäure Träger: Cordierit-Wabenkörper
Beladung durch mehrfache Tränkung bei Zimmertemperatur, dazwischen Trocknungen.
1. 15 Gew.% Manganacetat;
2. 1,5 Gew.% Kupfernitrat;

6

3. 12 Gew.% Manganacetylacetonat. Aktivierung durch Behandlung im Gasgemisch aus je 1000 ppm NO und NH₃, 1 % O₂, Rest N₂ mit SV = 3000 h⁻¹, innerhalb 5 h auf 200° C ansteigend.

| Aktivität | | | |
|---|---|---|---|
| Reaktion | Umsatz(%) | Temp.° C | Testgas, SV = 3000 h⁻¹ |
| NO-Reduktion | 89 | 170 | je 1000 ppm NO, NH₃, 1% O₂, Rest N₂ |
| NO-Reduktion | 86 | 185 | 1000 ppm NO, 3000 ppm CO, 500 bis 1000 ppm O₂, Rest N₂ |
| Ethanol-Ox. | 91 | 243 | 1800 ppm Ethanol in Luft |
| Aceton-Ox. | 89 | 235 | 2000 ppm Aceton in Luft |
| Ethylacetat-Ox. | 90 | 245 | 500 ppm Ethylacetat in Luft |
| Ether-Ox. | 90 | 260 | 1500 ppm Ether in Luft |
| Benzol-Ox. | 96 | 297 | 300 ppm Benzol in Luft |
| Benzylamin-Ox. | 83 | 253 | 1100 ppm Benzylamin in Luft |
| Anilin-Ox. | 89 | 305 | 1200 ppm Anilin in Luft |
| Propan-Ox. | 92 | 342 | 1000 ppm Propan in Luft |
| CO-Ox. | 98 | 155 | 1100 ppm CO, 2500 ppm O₂, Rest N₂ |

Beispiel 3, Manganacetat Mn(CH₃COO)₂ x 4 H₂O

Tränklösung: 123 g Manganacetat in 500 ml Wasser
Träger: Cordierit-Wabenkörper
Beladung durch wiederholte Tränkung bei Zimmertemperatur bis zur Beladung mit 15 Gew.% Manganacetat.
Aktivierung im Gasgemisch aus je 1000 ppm NO und NH₃, 1 % O₂, Rest N₂ mit SV = 3000 h⁻¹ innerhalb 5 h von Zimmertemperatur auf 200° C steigend.

| Aktivität | | | |
|---|---|---|---|
| Reaktion | Umsatz(%) | Temp.° C | Testgas, SV = 3000 h⁻¹ |
| Ethanol-Ox. | 89 | 294 | 1800 ppm Ethanol in Luft |
| Aceton-Ox. | 91 | 270 | 2000 ppm Aceton in Luft |
| Ethylacetat-Ox. | 93 | 309 | 500 ppm Ethylacetat in Luft |
| Ether-Ox. | 88 | 360 | 1500 ppm Ether in Luft |
| Benzol-Ox. | 97 | 355 | 300 ppm Benzol in Luft |
| Benzylamin-Ox. | 83 | 302 | 1100 ppm Benzylamin in Luft |
| Anilin-Ox. | 93 | 305 | 1200 ppm Anilin in Luft |
| Propan-Ox. | 92 | 375 | 1000 ppm Propan in Luft |
| CO-Ox. | 98 | 160 | 1100 ppm CO, 2500 ppm O₂, Rest N₂ |

Die gleiche Präparation wird auf Al₂O₃-Minimonolithen (wagon wheels) als Trägern durchgeführt. Der Aktivitätstest wird mit einem Schüttbett von 30 ml Gesamtvolumen durchgeführt mit den gleichen Testgaszusammensetzungen. Im Rahmen der Meßgenauigkeit werden die gleichen Umsätze bei den gleichen Temperaturen festgestellt.

Vergleichsbeispiel 1, Manganformiat

Ein Gegenbeispiel liefert Manganformiat. Mn(HCOO)₂. Aus einer Tränklösung von 50 g MnCO₃ x H₂O in 500 ml Ameisensäure wird durch Tränkung bei Zimmertemperatur eine Beladung von 15 Gew.% Manganformiat erzeugt. Durch Behandlung der Luft über 5 h von Zimmertemperatur auf 200° C ansteigend wird in die "aktive" Komponente überführt. Im gleichen Testgas wie bei Beispiel 2 wird die NO-Reduktion untersucht. Es zeigt sich ein Umsatzmaximum von 95 % bei 240° C. Nicht nur liegt die Temperatur des Umsatzmaximums wesentlich höher als bei dem Beispiel 2 beschriebenen Katalysator, sondern es wird auch noch NO fast ausschließlich zu $N_2O$ statt zu $N_2$ umgesetzt. Auch eine Behandlung mit dem in Beispiel 2 zur Aktivierung benutzten Gasgemisch führt hier nicht zu einer Veränderung der Aktivität bzw. Selektivität. Offensichtlich ist Formiat als Ligand zu wenig ausgedehnt, um bei der Aktivierung eine andere Struktur als das übliche Manganoxid entstehen zu lassen mit der von Manganoxid bekannten Aktivität, die fast ausschließlich zur Bildung von $N_2O$ führt.

Beispiel 4, Kufperacetylacetonat auf Manganoxid-Kupferoxid Washcoat

Tränklösungen:
1. 125 g Manganacetat, $Mn(CH_3COO)_2$ x 4 $H_2O$ in 500 ml Wasser
2. 12,5 g Kupfernitrat, $CU(NO_3)_2$ x 3 $H_2O$ in 500 ml Wasser
3. 52 g $CU(acace)_2$ in 180 ml Wasser und 20 ml Ameisensäure Träger: Cordierit-Wabenkörper
Beladung durch mehrfache Tränkungen bei Zimmertemperaturen mit den einzelnen Tränklösungen in der aufgeführten Reihenfolge, bis zu folgenden Beladungen:
1. 15 Gew.% Manganacetat; 2. 1,5 Gew.% Kupfernitrat; 3. 7,6 Gew.% Kupferacetylacetonat.
Aktivierung im Gasgemisch aus je 1000 ppm NO und $NH_3$, 1 % $O_2$, Rest $N_2$ mit SV = 3000 $h^{-1}$, innerhalb 5 h von Zimmertemperatur auf 320° C ansteigend.

| Aktivität | | | |
|---|---|---|---|
| Reaktion | Umsatz(%) | Temp.° C | Testgas, SV = 3000 $h^{-1}$ |
| NO-Reduktion | 92 | 180 | je 1000 ppm NO, $NH_3$, 1 % $O_2$, Rest $N_2$ |
| NO-Reduktion | 90 | 186 | 1000 ppm NO, 3000 ppm CO, 500 bis 1000 ppm $O_2$, Rest $N_2$ |
| Ethanol-Ox. | 95 | 210 | 1800 ppm Ethanol in Luft |
| Aceton-Ox. | 90 | 220 | 2000 ppm Aceton in Luft |
| Ethylacetat-Ox. | 98 | 215 | 500 ppm Ethylacetat in Luft |
| Ether-Ox. | 95 | 240 | 1500 ppm Ether in Luft |
| Benzol-Ox. | 95 | 290 | 300 ppm Benzol in Luft |
| Benzylamin-Ox. | 90 | 245 | 1100 ppm Benzylamin in Luft |
| Anilin-Ox. | 92 | 246 | 1200 ppm Anilin in Luft |
| Propan-Ox. | 95 | 320 | 1000 ppm Propan in Luft |
| CO-Ox. | 100 | 108 | 1100 ppm CO, 2500 ppm $O_2$, Rest $N_2$ |

Der Katalysator wird über 1000 h getestet. Eine Aktivitätseinbuße tritt nicht auf.
Die gleiche Präparation wird auf Aluminiumoxid-Pellets als Trägern durchgeführt. Die Aktivierung geschieht ebenfalls in der gleichen Weise, jedoch mit einer Raumgeschwindigkeit von SV = 500 $h^{-1}$. Der Aktivitätstest wird mit einem Schüttbett von 30 ml Gesamtvolumen durchgeführt mit dem gleichen Testgas, jedoch wegen des höheren Strömungswiderstandes des Schüttbettes mit einer Raumgeschwindigkeit von nur SV = 1000 $h^{-1}$.

8

| Aktivität | | | |
|---|---|---|---|
| Reaktion | Umsatz(%) | Temp. °C | Testgas, SV = 1000 h⁻¹ |
| NO-Reduktion | 92 | 165 | je 1000 ppm NO, $NH_3$, 1 % $O_2$, Rest $N_2$ |
| Ethanol-Ox. | 95 | 190 | 1800 ppm Ethanol in Luft |
| Aceton-Ox. | 90 | 210 | 2000 ppm Aceton in Luft |
| Ethylacetat-Ox. | 98 | 200 | 500 ppm Ethylacetat in Luft |
| Ether-Ox. | 95 | 220 | 1500 ppm Ether in Luft |
| Benzol-Ox. | 95 | 278 | 300 ppm Benzol in Luft |
| Benzylamin-Ox. | 90 | 235 | 1100 ppm Benzylamin in Luft |
| Anilin-Ox. | 92 | 230 | 1200 ppm Anilin in Luft |
| Propan-Ox. | 95 | 305 | 1000 ppm Propan in Luft |
| CO-Ox. | 100 | 90 | 1100 ppm CO, 2500 ppm $O_2$, Rest $N_2$ |

Beispiel 5, Kupferacetylacetonat auf Kupferoxid-Washcoat

Tränklösungen:
1. 12 g Kupfernitrat $Cu(NO_3)_2$ x 3 $H_2O$ in 500 ml Wasser
2. 52 g $Cu(acace)_2$ in 180 ml Wasser und 20 ml Ameisensäure Träger: Cordierit-Wabenkörper
Beladung durch Tränkung bei Zimmertemperatur bis zu 1. 14,2 Gew.% Kupfernitrat:
2. 7,6 Gew.% Kupferacetylacetonat.
Aktivierung wie in Beispiel 4.

| Aktivität | | | |
|---|---|---|---|
| Reaktion | Umsatz(%) | Temp. °C | Testgas, SV = 1000 h⁻¹ |
| NO-Reduktion | 85 | 245 | je 1000 ppm NO, $NH_3$, 1 % $O_2$, Rest $N_2$ |

Vergleichsbeispiel 2, Kupferformiat auf Kupferoxid-Washcoat

Auch hier liefert die Präparation von Kupferformiat das wenig aktive Gegenbeispiel. Aus Kupferformiat in wässriger Lösung oder auch durch Einwirkung von Ameisensäure auf ein aus Kupfernitrat auf dem Träger erzeugtes Kupferoxid wird eine Beladung mit Kupferformiat erzeugt, die mit Luft von Zimmertemperatur innerhalb 5 h auf 320° C ansteigend behandelt wird. Diese Präparation hat mit dem gleichen Testgas wie in den Beispielen 4 und 5 einen maximalen Umsatz bezüglich NO von 50 % bei 300° C. Auch durch Behandlung mit einem Gasgemisch wie in Beispiel 4 und 5 wird die Aktivität nur unwesentlich erhöht.

Beispiel 6, Vanadylacetylacetonat auf Vanadinoxid-Washcoat

Tränklösungen:
1. 70 g Bis-oxalato-oxovanadat(IV), $VO(HC_2O_4)_2$, erzeugt aus 18 g Vandinoxid $V_2O_5$ und 50 g Oxalsäure, zusammen mit 2 g Natriumwolframat, $Na_2WO_4$ x 2 $H_2O$, je 100 ml Wasser;
2. 20 g Vanadylacetylacetonat, $VO(acace)_2$ je 100 ml Chloroform oder je 100 ml Gemisch aus Ameisensäure und Wasser im Verhältnis 1:10. Träger: Cordierit-Wabenkörper.
Beladung durch mehrfache Tränkung bei Zimmertemperatur bis zu den gewünschten Beladungen:
1. 26 Gew.% Bis-oxalato-vanadat(IV) und Natriumwolframat im Verhältnis 9:1, das entspricht einer Beladung mit 15 Gew.% $V_2O_5$ + $Na_2WO_4$;
2. 7 Gew.% $VO(acace)_2$. Aktivierung im Gasgemisch aus je 1000 ppm NO und $NH_3$, 1 % $O_2$, Rest $N_2$, mit SV = 3000 h⁻¹ innerhalb 10 h von Zimmertemperatur bis 450° C ansteigend und für 8 h bei 450° C gehalten.

| Aktivität | | | |
|---|---|---|---|
| Reaktion | Umsatz(%) | Temp. °C | Testgas, SV = 1000 h$^{-1}$ |
| NO-Reduktion | 97 90 80 | 285 235-340 205-370 | je 1000 ppm NO, NH$_3$, 1 bis 5 % O$_2$, Rest N$_2$ |

Die gleiche Präparation wird auf Al$_2$O$_3$-Minimonolithen (wagon wheels) als Trägern durchgeführt. Der Aktivitätstest wird mit einem Schüttbett von 30 ml Gesamtvolumen durchgeführt mit der gleichen Testgaszusammensetzung und Raumgeschwindigkeit wie vorstehend. Im Rahmen meßtechnischer Schwankungen ergibt sich die gleiche Temperatur-Umsatz-Kennlinie wie vorstehend für einen Cordierit-Wabenkörper aufgezeigt.

Beispiel 7, Bis-oxalato-oxovanadat(IV) VO(HC$_2$O$_4$)$_2$

Tränklösung: Wie Lösung 1 in Beispiel 6
Träger: Cordierit-Wabenkörper
Beladung durch Tränkung bei Zimmertemperatur bis die gewünschte Beladung erreicht ist: 24 Gew.% Oxalatokomplex und Natriumwolframat im Verhältnis 9:1, das entspricht 12,5 Gew.% V$_2$O$_5$ + Na$_2$WO$_4$. Aktivierung wie in Beispiel 6.

| Aktivität | | | |
|---|---|---|---|
| Reaktion | Umsatz(%) | Temp. °C | Testgas, SV = 3000 h$^{-1}$ |
| NO-Reduktion | 88 80 | 280 235-345 | je 1000 ppm NO, NH$_3$, 1 bis 10 % O$_2$, Rest N$_2$ |

Der Katalysator wurde über 800 h getestet ohne Aktivitätseinbuße.
Die gleiche Präparation wird auf Al$_2$O$_3$-Pellets als Trägern durchgeführt. Die Aktivierung geschieht wie vorstehend beschrieben, jedoch mit einer Raumgeschwindigkeit von SV = 1500 h$^{-1}$. Der Aktivitätstest wird in einem Schüttbett von 30 ml Gesamtvolumen durchgeführt mit dem gleichen Testgas jedoch einer Raumgeschwindigkeit SV = 1000 h$^{-1}$. Der Katalysator zeigt ein Umsatzmaximum von 90 % NO-Minderung bei 250 °C.
Weiterhin wird die gleiche Präparation auf aluminiumoxidüberzogenen Aluminiumwellblechrollen als Trägern durchgeführt bis zu einer Beladung mit 8 Gew.% V$_2$O$_5$ + Na$_2$WO$_4$. Die Aktivierung geschieht wie vorstehend mit SV = 3000 h$^{-1}$. Eine Wellblechrolle von 3 cm Durchmesser und 5 cm Länge wird als Testkörper benutzt mit den genannten Testgaszusammensetzungen und SV = 3000 h$^{-1}$ Raumgeschwindigkeit. Es wird ein maximaler Umsatz bezogen auf NO von 82 % bei 290 °C erreicht.
Die Beispiele 6 und 7 zeigen die beschriebene Wirkung der durch die Geometrie der ebenen bzw. fast ebenen Liganden des Metalls, hier des Vanadyls VO, hervorgerufen, für die katalytische Aktivität günstigen Anordnung der aus den Komplexen erzeugten Oxidationsprodukte. Die Aktivität des in Beispiel 6 beschriebenen Katalysators unterscheidet sich praktisch nicht von der, die unter Verwendung von Vanadylphthalocyanin, VOPc, bei gleicher Beladung und gleicher Aktivierungsbehandlung gewonnen wird.

Vergleichsbeispiel 3, Vanadinoxid

Ein Gegenbeispiel liefert die Präparation von Vanadinoxid. V$_2$O$_3$, aus Ammoniumvanadat, NH$_4$VO$_3$: Aus

20 g Ammoniumvanddat in 100 ml siedendem Wasser wird eine Suspension hergestellt, mit der unter ständigem Weitersieden ein Trägerkörper getränkt wird, so oft, bis eine Beladung von 16 Gew.% Ammoniumvanadat erreicht ist. Daraus wird durch thermische Behandlung an Luft - von Zimmertemperatur bis auf 450°C ansteigend in 12 h, anschließend 8 h bei 450°C halten - die Beladung mit 13 Gew.% $V_2O_5$ erzeugt. Die so erzeugten Präparationen zeigen in Aktivitätstests analog denen in Beispiel 6 oder 7 ein Umsatzmaximum von höchstens 50 % bezogen auf NO bei Temperaturen zwischen 330 bis 340°C.

Beispiel 8, Hämin auf Eisenoxid-Washcoat

Tränklösungen:
    1. 80 g Eisennitrat, $Fe(NO_3)_3$ x 9 $H_2O$ in 200 ml Wasser;
    2. 10 g Hämin in 100 ml Ameisensäure Träger: Cordierit-Wabenkörper
Beladung bei Zimmertemperatur durch mehrfache Tränkungen.
1. 6,3 Gew.% Eisennitrat; 2. 7,1 Gew.% Hämin.
Aktivierung durch Behandlung im Gasgemisch aus je 1000 ppm NO und $NH_3$, 1 % $O_2$, Rest $N_2$, mit SV = 3000 $h^{-1}$ von Zimmertemperatur auf 340°C in 5 h ansteigend.

| Aktivität | | | |
|---|---|---|---|
| Reaktion | Umsatz(%) | Temp. °C | Testgas, SV = 3000 $h^{-1}$ |
| NO-Reduktion | 87<br>80 | 320<br>300-350 | je 1000 ppm NO, $NH_3$, 1 % $O_2$, Rest $N_2$ |

Beispiel 9, Nickeldimethylglyoxim auf Nickeloxid-Washcoat

Tränklösungen:
    1. 175 g Nickelnitrat, $Ni(NO_3)_2$ x 6 $H_2O$ in 300 ml Wasser;
    2. 10 g Dimethylglyoxim in 200 ml Ethanol Träger: Cordierit-Wabenkörper
Tränkung mit Nickelnitrat bis zur Beladung mit 18 Gew.%. Anschließend Synthese des Nickeldimethylglyoxims auf und in dem Träger durch Fällung vor Ort durch zweimaliges Tränken für jeweils 1 Minute in Lösung 2 bei Zimmertemperatur.
Aktivierung durch Behandlung im Gasgemisch aus je 1000 ppm NO und $NH_3$, 1 % $O_2$, Rest $N_2$ mit SV = 3000 $h^{-1}$, in 5 h von Zimmertemperatur auf 320°C ansteigend.

| Aktivität | | | |
|---|---|---|---|
| Reaktion | Umsatz(%) | Temp. °C | Testgas, SV = 3000 $h^{-1}$ |
| NO-Reduktion | 55 | 250 | je 1000 ppm NO, $NH_3$, 1 % $O_2$, Rest $N_2$ |

Die gleiche Präparation wird durch Synthese vor Ort in nickelausgetauschten NaY-Zeolithpellets mit ethanolischer Dimethylglyoximlösung durchgeführt. Der Ionenaustausch wird durch zweimalige Behandlung über je 24 h mit einer 0,025 molaren Nickelacetatlösung durchgeführt. Der nickelausgetauschte Zeolith wird mit Lösung 2 behandelt und das im Zeolithen erzeugte Nickeldimethylglyoxim durch aktivierende Behandlung mit dem genannten Gasgemisch bei SV = 500 $h^{-1}$ in den aktiven Katalysator überführt. Der Aktivitätstest geschieht mit einem Körnerschüttbett von 30 ml Gesamtvolumen bei einer Raumgeschwindigkeit von SV = 800 $h^{-1}$. Das Umsatzmaximum der NO-Reduktion wird mit 80 % Umsatz bei 230°C festgestellt.

Beispiel 10, Mangancarbonat

Tränklösung: Suspension von 50 g $MnCO_3$ x $H_2O$ in 500 ml Wasser und 5 ml Salpetersäure

Träger: Cordierit-Wabenkörper

Mehrfache Tränkung bis zur Beladung mit 5 Gew.% Mangancarbonat.

Aktivierung durch Behandlung im Gasgemisch von je 1000 ppm NO und $NH_3$, 1 % $O_2$, Rest $N_2$, mit SV = 3000 $h^{-1}$ innerhalb von 5 h von Zimmertemperatur auf 270°C ansteigend.

| Aktivität | | | |
|---|---|---|---|
| Reaktion | Umsatz(%) | Temp.°C | Testgas, SV = 3000 $h^{-1}$ |
| NO-Reduktion | 95 | 140 | je 1000 ppm NO, $NH_3$, 1 % $O_2$, Rest $N_2$ |
| | 85 | 97 | 1000 ppm NO, 900 ppm $NH_3$, 6 % $O_2$, Rest $N_2$ |
| Ethanol-Ox. | 91 | 294 | 1800 ppm Ethanol in Luft |
| Aceton-Ox. | 87 | 273 | 2000 ppm Aceton in Luft |
| Ethylacetat-Ox. | 93 | 305 | 500 ppm Ethylacetat in Luft |
| Ether-Ox. | 83 | 350 | 1500 ppm Ether in Luft |
| Benzol-Ox. | 92 | 354 | 300 ppm Benzol in Luft |
| Benzylamin-Ox. | 88 | 302 | 1100 ppm Benzylamin in Luft |
| Anilin-Ox. | 93 | 305 | 1200 ppm Anilin in Luft |
| Propan-Ox. | 97 | 373 | 1000 ppm Propan in Luft |
| CO-Ox. | 98 | 165 | 1100 ppm CO, 2500 ppm $O_2$, Rest $N_2$ |

Der Katalysator wurde über 300 h getestet ohne Aktivitätseinbuße.


Beispiel 11, Eisenoxid

Tränklösung: 80 g $Fe(NO_3)_3$ x 9 $H_2O$ in 200 ml Wasser

Träger: Cordierit-Wabenkörper

Beladung durch mehrfache Tränkungen bis zu 6,3 Gew.% Eisennitrat.

Aktivierung durch Behandlung im Gasgemisch aus je 1000 ppm NO und $NH_3$, 1 % $O_2$, Rest $N_2$, mit SV = 3000 $h^{-1}$, innerhalb 5 h auf 340°C ansteigend.

| Aktivität | | | |
|---|---|---|---|
| Reaktion | Umsatz(%) | Temp.°C | Testgas, SV = 3000 $h^{-1}$ |
| NO-Reduktion | 83 | 300 | je 1000 ppm NO, $NH_3$, 1 bis 3 % $O_2$, Rest $N_2$ |

Die Beispiele 10 und 11 zeigen, wie durch die Einwirkung strömender oxidierender Gase, die komplexbildende Bestandteile enthalten, hier NO und $NH_3$, bei moderaten Temperaturen und genügend langer Einwirkzeit aus den aufgebrachten oder gefällten Oxiden oder Carbonaten durch Veränderung der Struktur und Geometrie hochaktive Oberflächen entstehen.


Vergleichsbeisoiel 4, Eisenoxid

Als Gegenbeispiel sei Eisenoxid ohne diese Aktivierung durch Komplexbildner angeführt. Eine auf die gleiche Weise wie in Beispiel 11 hergestellte Eisennitratbeladung, die nicht wie dort beschrieben in Gegenwart einer zu Liganden befähigte Komponenten enthaltenden strömenden Gasmischung in Oxid überführt und aktiviert wird, sondern an Luft nach dem gleichen Temperaturprogramm in Oxid umgewandelt wird, zeigt nur ein Umsatzmaximum von 50 % bei 325°C.


Vergleichsbeispiel 5, Manganoxid

Als weiteres Gegenbeispiel sei Manganoxid angeführt. Tränklösung: 50 g $MnCO_3$ x $H_2O$ in 500 ml verdünnter Salpetersäure: die Suspension wird für 30 Minuten auf 100° C erwärmt, um das Mangan(II)nitrat zu erzeugen. Ebenso· kann von einer Lösung von 70 g $Mn(NO_3)_2$ x 6 $H_2O$ in 500 ml Wasser ausgegangen werden.

Träger: Cordierit-Wabenkörper

Mehrfachtränkung bei Zimmertemperatur bis zu Beladung von 12 Gew.% $MnO_2$, Aktivierung durch Behandlung an Luft, in 5 h auf 200° C ansteigend.

| Aktivität | | | |
|---|---|---|---|
| Reaktion | Umsatz(%) | Temp.° C | Testgas, SV = 3000 $h^{-1}$ |
| NO-Reduktion | 95 | 195 | je 1000 ppm NO, $NH_3$, 1 bis 4 % $O_2$, Rest $N_2$ |

Die Temperatur des Umsatzmaximums liegt bei 55° C höher als in Beispiel 10. Von noch gravierender Bedeutung ist die Tatsache, daß hier, wie von Manganoxid bekannt, die Reaktion weitgehend zur Bildung von $N_2O$ statt zu $N_2$ führt, während dies an dem in Beispiel 10 beschriebenen Katalysator nur in untergeordnetem Maße, wie bei guten Denoxkatalysatoren gefordert, stattfindet.

Vergleichsbeispiel 6, Manganoxid

Ein weiteres Gegenbeispiel liefert das aus. Manganformiat durch Behandlung an Luft, in 5 h von Zimmertemperatur auf 200° C ansteigend, gewonnene Manganoxid. Das Umsatzmaximum der NO-Reduktion liegt bei 240° C, das ist um 100° C höher als in Beispiel 10, und das umgesetzte NO wird fast ausschließlich in $N_2O$ überführt.

Beispiel 12, Vandinoxid

Tränklösung: Suspension von 20 g Ammoniumvanadat, $NH_4VO_3$ je 100 ml siedenden Wassers.
Träger: Cordierit-Wabenkörper
Beladung durch Tränken in der siedenden Suspension bis der Wert von 15 Gew.% $NH_4VO_3$, das entspricht 13 Gew.% $V_2O_5$ erreicht ist.
Wird die so erzeugte Beladung mit Luft "aktiviert" durch Aufheizen innerhalb von 12 h auf 450° C und Halten bei dieser Temperatur für 8 h, so entsteht eine nur wenig aktive Substanz: Umsatzmaximum bei höchstens 50 % bei 330 bis 340° C. Bei Aktivierung mit einer Komplexliganden enthaltenden Gasmischung entsteht eine Präparation von wesentlich höherer Aktivität und einem Aktivitätsmaximum bei rund 40° C niedrigeren Temperaturen.
Aktivierung durch Behandlung im Gasgemisch aus je 1000 ppm NO, $NH_3$, 1 bis 4 % $O_2$, Rest $N_2$, mit Raumgeschwindigkeit SV = 3000 $h^{-1}$ innerhalb 12 h auf 405° C ansteigend und 8 h lang bei 450° C halten.

| Aktivität | | | |
|---|---|---|---|
| Reaktion | Umsatz(%) | Temp.° C | Testgas, SV = 3000 $h^{-1}$ |
| NO-Reduktion | 70 | 290-300 | je 1000 ppm NO, $NH_3$, 1 % $O_2$, Rest $N_2$ |

**Ansprüche**

1. Trägergestützter Katalysator auf Basis von Übergangsmetallen zum Entfernen von Stickoxiden, Kohlenmonoxid und/oder organischen Verbindungen aus Abgasen, herstellbar durch

(a) Beladen eines Trägers mit wenigstens einer Metallkomplexverbindung mit einer ebenen oder nur wenig davon abweichenden Konformation und Aktivieren des beladenen Trägers mit

(i) einem Gasgemisch, das Stickoxid und/oder Sauerstoff enthält, bei Temperaturen zwischen Raumtemperatur und 500°C, oder mit

(ii) einer Lösung, die Salpetersäure und/oder ein Oxidationsmittel enthält; oder

(b) Beladen eines Trägers mit wenigstens einem Übergangsmetalloxid oder -carbonat und Behandeln des beladenen Trägers mit einem oxidierenden Gasgemisch, das zur Komplexbildung befähigte freie Liganden enthält, bei Temperaturen zwischen Raumtemperatur und 500°C; oder

(c) Behandeln wenigstens eines Übergangsmetalloxids oder -carbonats mit einer Lösung, die Salpetersäure und/oder ein Oxidationsmittel sowie zur Komplexbildung befähigte freie Liganden enthält, und Beladen eines Trägers mit dem behandelten Übergangsmetalloxid oder -carbonat, mit der Maßgabe, daß als Übergangsmetallverbindung kein Metallphthalocyaninkomplex verwandt wird.

2. Katalysator nach Anspruch 1, dadurch gekennzeichnet, daß in der Herstellungsvariante (a) der Träger vor der Aktivierung zusätzlich mit wenigstens einem Übergangsmetalloxid beladen wird.

3. Katalysator nach Anspruch 1 oder 2, dadurch gekennzeichnet, daß als Übergangsmetall wenigstens eines aus V, Cr, Mo, W, Mn, Fe, Co, Ni oder Cu ist.

4. Katalysator nach einem der Ansprüche 1 bis 3, dadurch gekennzeichnet, daß als Trägermaterial Aluminiumoxide, Siliciumdioxid, Silikate, Zeolithe oder Aluminiumsilikate verwandt werden.

5. Katalysator nach Anspruch 4, dadurch gekennzeichnet, daß als Träger ein Cordierit- oder Mullit-Wabenkörper verwandt wird.

6. Verfahren zur Herstellung des trägergestützten Katalysators nach einem der Ansprüche 1 bis 5 durch

(a) Beladen eines Trägers mit wenigstens einer Metallkomplexverbindung mit einer ebenen oder nur wenig davon abweichenden Konformation und Aktivieren des beladenen Trägers mit

(i) einem Gasgemisch, daß Stickoxid und/oder Sauerstoff enthält, bei Temperaturen zwischen Raumtemperatur und 500°C, oder mit

(ii) einer Lösung, die Salpetersäure und/oder ein Oxidationsmittel enthält; oder

(b) Beladen eines Trägers mit wenigstens einem Übergangsmetalloxid oder -carbonat und Behandeln des beladenen Trägers mit einem oxidierenden Gasgemisch, das zur Komplexbildung befähigte freie Liganden enthält bei Temperaturen zwischen Raumtemperatur und 500°C; oder

(c) Behandeln wenigstens eines Übergangsmetalloxids oder -carbonats mit einer Lösung, die Salpetersäure und/oder ein Oxidationsmittel enthält und Beladen eines Trägers mit dem behandelten Übergangsmetalloxid oder -carbonat.

7. Verfahren nach Anspruch 6, dadurch gekennzeichnet, daß in Variante (b) das Beladen des Trägers mit wenigstens einem Übergangsmetalloxid oder -carbonat durch Aufbringen eines zersetzlichen Übergangsmetallsalzes auf den Träger und Zersetzung des Salzes erfolgt.

8. Verfahren nach einem der Ansprüche 6 und 7, dadurch gekennzeichnet, daß in Variante (a) oder (b) die Aktivierung bei einer Temperatur erfolgt, die von Raumtemperatur auf 80°C bis 500°C gesteigert wird.

9. Verfahren nach Anspruch 8, dadurch gekennzeichnet, daß die Aktivierungstemperatur von Raumtemperatur auf 180°C bis 450°C gesteigert wird.

10. Verfahren nach einem der Ansprüche 6 bis 9, dadurch gekennzeichnet, daß das Aktivierungsgasgemisch in Variante (a) und (b) NO, $NH_3$ und $O_2$ oder NO, CO und $O_2$ umfaßt.

11. Verfahren nach einem der Ansprüche 1 bis 9, dadurch gekennzeichnet, daß in Variante (b) der zur Komplexbildung befähigte Ligand wenigstens einer aus NO, CO, $NH_3$, $C_2H_4$, $N_2H_4$ oder $H_2NC_2H_4NH_2$ ist.

12. Verfahren nach Anspruch 6 oder 7, dadurch gekennzeichnet, daß in Variante (a) oder (c) die Behandlung in salpetersaurer bzw. nitrat- oder nitritionenhaltiger Lösung durchgeführt wird.

13. Verwendung der Katalysatoren eines der Ansprüche 1 bis 5 zur Behandlung von Stickoxide, Kohlenmonoxid und/oder organische Verbindungen enthaltenden Abgasen.